# EUROPEAN PATENT APPLICATION

(11) **EP 4 772 735 A1**
(43) Date of publication of application: **08.07.2026**
(21) Application number: 24867966.4
(22) Date of filing: 13.08.2024
(51) Int. Cl.: F02M 21/02, F02D 19/02, F02D 19/08

(54) **ENGINE SYSTEM**

(30) Priority: 19.09.2023 JP 2023150766
(71) Applicant: KABUSHIKI KAISHA TOYOTA JIDOSHOKKI, Kariya-shi, Aichi 448-8671 (JP)
(72) Inventor: TANAKA, Yuto, Kariya-shi, Aichi 448-8671 (JP); HOMMA, Takayuki, Kariya-shi, Aichi 448-8671 (JP); TAKEUCHI, Yoshitaka, Kariya-shi, Aichi 448-8671 (JP)
(74) Representative: Winter, Brandl - Partnerschaft mbB
(86) International application number: PCT/JP2024/028901
(87) International publication number: WO 2025/062885

(57) **Abstract**

An engine system includes: a first flow-rate-control-valve configured to control a flow rate of air supplied to an engine; a first fuel-injection-valve configured to inject fuel toward the engine; a reformer configured to reform fuel to generate a reformed gas containing hydrogen; a second flow-rate-control-valve configured to control a flow rate of air supplied to the reformer; a second fuel-injection-valve configured to inject fuel toward the reformer; and a control unit configured to control the first flow-rate-control-valve, the first fuel-injection-valve, the second flow-rate-control-valve, and the second fuel-injection-valve based on a command value for the engine. When the command value changes during operation of the engine, the control unit sets a target-opening-degree of the first flow-rate-control-valve corresponding to the command value as a first target-opening-degree, sets a target-opening-degree of the second flow-rate-control-valve corresponding to the command value as a second target-opening-degree, and controls the first flow-rate-control-valve and the second flow-rate-control-valve so that a timing at which an opening-degree of the first flow-rate-control-valve reaches the first target-opening-degree is later than a timing at which an opening-degree of the second flow-rate-control-valve reaches the second target-opening-degree.

## Description

### Technical Field

The present disclosure relates to an engine system.

### Background Art

As a related-art engine system, for example, a technology described in Patent Literature 1 is known. The engine system described in Patent Literature 1 includes a main reformer that is mounted on an exhaust pipe of an internal combustion engine and reforms fuel with a reforming catalyst, a reformed gas supply pipe that supplies reformed gas generated by this main reformer, a gas injection valve that injects and supplies the reformed gas into an intake pipe, and a plurality of fuel-injection-valves with sub-reformers provided for each cylinder at a branch portion of the intake pipe. When the supply of the reformed gas from the main reformer and the gas injection valve is insufficient, the shortage is compensated for by the fuel-injection-valves with sub-reformers. Thereby, even in a transient state such as during rapid acceleration, it becomes possible to supply sufficient reformed gas to the internal combustion engine.

### Citation List

### Patent Literature

[Patent Literature 1] Japanese Patent Application Laid-Open No. 2001-12321

### Summary of Invention

### Technical Problem

However, in the above related art, in addition to the main reformer and the gas injection valve, the fuel-injection-valve with a sub-reformer is required for each cylinder of the engine (internal combustion engine). Further, along with the addition of the fuel-injection-valves with sub-reformers, a temperature sensor for detecting the temperature of the reforming catalyst in the sub-reformer, a pressure sensor for detecting the pressure of the reformed gas in the sub-reformer, and the like are also required. For this reason, the configuration of the engine system becomes complicated. Therefore, it is desired to ensure a suitable air-fuel ratio during a transient period of the engine while simplifying the configuration of the engine system.

An aspect of the present disclosure is to provide an engine system capable of ensuring a suitable air-fuel ratio during a transient period of the engine while simplifying the system configuration.

### Solution to Problem

(1) An engine system according to an aspect of the present disclosure includes an engine in which fuel combusts together with hydrogen; an intake flow path through which air supplied to the engine flows; a first flow-rate-control-valve provided in the intake flow path and configured to control a flow rate of air supplied to the engine; a first fuel-injection-valve configured to inject fuel toward the engine; a reformer including a catalyst that decomposes the fuel into the hydrogen and configured to reform the fuel to generate a reformed gas containing the hydrogen; an upstream-side reforming flow path through which air supplied to the reformer flows; a downstream-side reforming flow path through which the reformed gas generated by the reformer flows toward the engine; a second flow-rate-control-valve provided in the upstream-side reforming flow path or the downstream-side reforming flow path and configured to control a flow rate of air supplied to the reformer; a second fuel-injection-valve configured to inject fuel toward the reformer; a command value output unit configured to output a command value for the engine after the engine is started; and a control unit configured to control the first flow-rate-control-valve, the first fuel-injection-valve, the second flow-rate-control-valve, and the second fuel-injection-valve based on the command value output from the command value output unit. When the command value output from the command value output unit changes during operation of the engine, the control unit sets a target-opening-degree of the first flow-rate-control-valve corresponding to the command value as a first target-opening-degree, sets a target-opening-degree of the second flow-rate-control-valve corresponding to the command value as a second target-opening-degree, and controls the first flow-rate-control-valve and the second flow-rate-control-valve so that a timing at which an opening-degree of the first flow-rate-control-valve reaches the first target-opening-degree is later than a timing at which an opening-degree of the second flow-rate-control-valve reaches the second target-opening-degree.

In such an engine system, when fuel and air are supplied to the reformer, a reformed gas containing hydrogen is generated by the catalyst of the reformer, and the reformed gas is supplied to the engine. When fuel and air are supplied to the engine, the fuel mixes with hydrogen and combusts in the engine. At this time, air flows through the intake flow path and is supplied to the engine, and fuel is injected toward the engine from the first fuel-injection-valve. On the other hand, air flows through the upstream-side reforming flow path and is supplied to the reformer, and fuel is injected toward the reformer from the second fuel-injection-valve. The reformed gas is generated in the reformer, and the reformed gas flows through the downstream-side reforming flow path and is supplied to the engine. For this reason, the air flowing through the intake flow path is promptly supplied to the engine, but the reformed gas is supplied to the engine with a delay relative to the air. Therefore, when the command value for the engine changes during operation of the engine, the flow rate of the reformed gas supplied to the engine changes with a delay relative to the flow rate of the air supplied to the engine. In this case, a suitable air-fuel ratio is not ensured in the engine.

Therefore, when the command value for the engine changes during operation of the engine, the target-opening-degree of the first flow-rate-control-valve corresponding to the command value is set as the first target-opening-degree, and the target-opening-degree of the second flow-rate-control-valve corresponding to the command value is set as the second target-opening-degree. Then, the first flow-rate-control-valve and the second flow-rate-control-valve are controlled so that the timing at which the opening-degree of the first flow-rate-control-valve reaches the first target-opening-degree is later than the timing at which the opening-degree of the second flow-rate-control-valve reaches the second target-opening-degree. For this reason, the timing at which the opening-degree of the first flow-rate-control-valve reaches the first target-opening-degree becomes later than the timing at which the opening-degree of the second flow-rate-control-valve reaches the second target-opening-degree. Accordingly, since the reformed gas and the air are suitably supplied to the engine even during a transient period in which operating conditions of the engine change, a suitable air-fuel ratio is ensured. Further, since a sub-reformer is not provided for each cylinder of the engine, a valve or the like for injecting fuel toward the sub-reformer is also not provided. Therefore, simplification of the configuration of the engine system is achieved.

(2) In the above (1), when the command value output from the command value output unit changes in an increasing direction during operation of the engine, the control unit may set the first target-opening-degree and the second target-opening-degree such that the first target-opening-degree and the second target-opening-degree increase in accordance with the command value.

In such a configuration, when the command value for the engine changes in an increasing direction during operation of the engine, the first target-opening-degree and the second target-opening-degree are set so as to increase in accordance with the command value. For this reason, the timing at which the opening-degree of the first flow-rate-control-valve increases to the first target-opening-degree becomes later than the timing at which the opening-degree of the second flow-rate-control-valve increases to the second target-opening-degree. Therefore, since a suitable air-fuel ratio is ensured, misfire caused by a state where the flow rate of hydrogen contained in the reformed gas is small relative to the flow rate of air is suppressed.

(3) In the above (1) or (2), when the command value output from the command value output unit changes in a decreasing direction during operation of the engine, the control unit may set the first target-opening-degree and the second target-opening-degree such that the first target-opening-degree and the second target-opening-degree decrease in accordance with the command value.

In such a configuration, when the command value for the engine changes in a decreasing direction during operation of the engine, the first target-opening-degree and the second target-opening-degree are set so as to decrease in accordance with the command value. For this reason, the timing at which the opening-degree of the first flow-rate-control-valve decreases to the first target-opening-degree becomes later than the timing at which the opening-degree of the second flow-rate-control-valve decreases to the second target-opening-degree. Therefore, since a suitable air-fuel ratio is ensured, excessive combustion or an unstable state of engine control caused by a state where the flow rate of hydrogen contained in the reformed gas is large relative to the flow rate of air is suppressed.

(4) In any one of the above (1) to (3), the control unit may control the first flow-rate-control-valve and the second flow-rate-control-valve so that a timing at which the opening-degree of the first flow-rate-control-valve starts to change is later than a timing at which the opening-degree of the second flow-rate-control-valve starts to change.

In such a configuration, the timing at which the opening-degree of the first flow-rate-control-valve starts to change is later than the timing at which the opening-degree of the second flow-rate-control-valve starts to change. For this reason, the timing at which the opening-degree of the first flow-rate-control-valve reaches the first target-opening-degree becomes reliably later than the timing at which the opening-degree of the second flow-rate-control-valve reaches the second target-opening-degree. Further, since the opening-degree of the first flow-rate-control-valve changes rapidly, it becomes easier to control the flow rate of air supplied to the engine.

(5) In any one of the above (1) to (3), the control unit may control the first flow-rate-control-valve and the second flow-rate-control-valve so that an opening/closing speed of the first flow-rate-control-valve is slower than an opening/closing speed of the second flow-rate-control-valve.

In such a configuration, the opening/closing speed of the first flow-rate-control-valve is slower than the opening/closing speed of the second flow-rate-control-valve. For this reason, the timing at which the opening-degree of the first flow-rate-control-valve reaches the first target-opening-degree becomes reliably later than the timing at which the opening-degree of the second flow-rate-control-valve reaches the second target-opening-degree. Further, since the opening-degree of the first flow-rate-control-valve changes gradually, the first flow-rate-control-valve performs the opening/closing operation smoothly.

(6) In any one of the above (1) to (5), the second flow-rate-control-valve may be disposed in the downstream-side reforming flow path and configured to control the flow rate of the reformed gas supplied to the engine together with the flow rate of air supplied to the reformer.

In such a configuration, air flowing through the upstream-side reforming flow path is supplied to the reformer to generate the reformed gas, and the reformed gas flows through the downstream-side reforming flow path and is supplied to the engine. The second flow-rate-control-valve is disposed in the downstream-side reforming flow path. Therefore, compared to a case where the second flow-rate-control-valve is disposed in the upstream-side reforming flow path, when the opening-degree of the second flow-rate-control-valve is increased, the supply amount of the reformed gas to the engine can be promptly increased. When the opening-degree of the second flow-rate-control-valve is decreased, the supply amount of the reformed gas to the engine can be promptly decreased.

### Advantageous Effects of Invention

According to the present disclosure, a suitable air-fuel ratio can be ensured during a transient period of the engine while simplifying the configuration of the system.

### Brief Description of Drawings

[FIG. 1] FIG. 1 is a schematic configuration diagram illustrating an engine system according to an embodiment of the present disclosure.
[FIG. 2] FIG. 2 is a flowchart illustrating a procedure of control processing executed by a control unit shown in FIG. 1.
[FIG. 3] FIG. 3 is a flowchart illustrating details of a procedure of control processing at the time of an accelerator opening-degree increase in step S104 shown in FIG. 2.
[FIG. 4] FIG. 4 is a flowchart illustrating details of a procedure of control processing at the time of an accelerator opening-degree decrease in step S105 shown in FIG. 2.

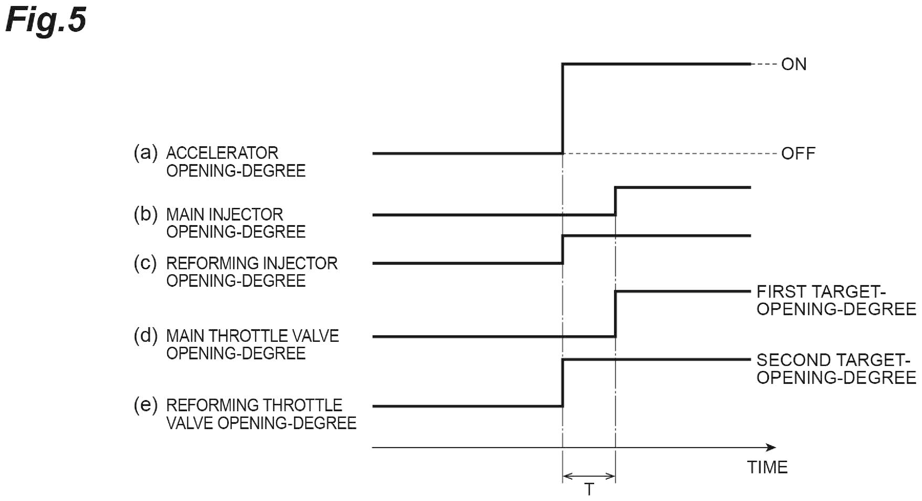

[FIG. 5] (a) of FIG. 5 is a timing chart illustrating switching of an accelerator from OFF to ON. (b) of FIG. 5 is a timing chart illustrating an operation of a main injector when the accelerator switches from OFF to ON. (c) of FIG. 5 is a timing chart illustrating an operation of a reforming injector when the accelerator switches from OFF to ON. (d) of FIG. 5 is a timing chart illustrating an operation of a main throttle valve when the accelerator switches from OFF to ON. (e) of FIG. 5 is a timing chart illustrating an operation of a reforming throttle valve when the accelerator switches from OFF to ON.

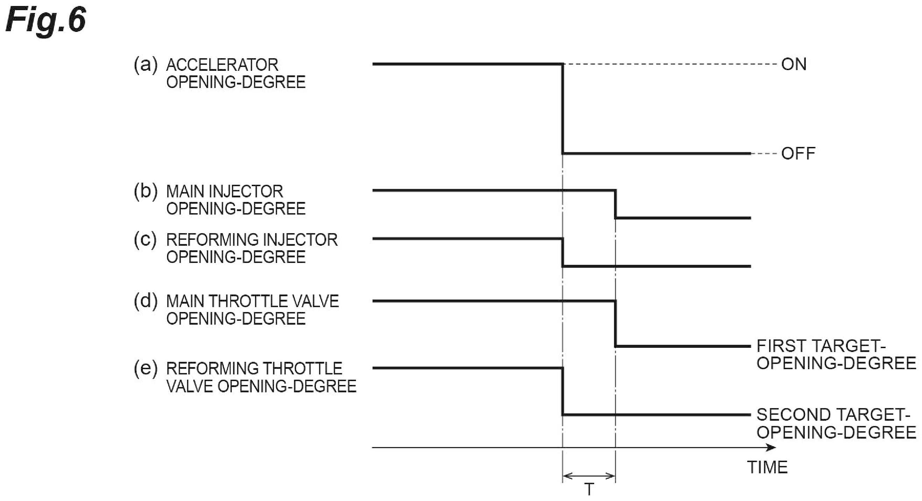

[FIG. 6] (a) of FIG. 6 is a timing chart illustrating switching of an accelerator from ON to OFF. (b) of FIG. 6 is a timing chart illustrating an operation of a main injector when the accelerator switches from ON to OFF. (c) of FIG. 6 is a timing chart illustrating an operation of a reforming injector when the accelerator switches from ON to OFF. (d) of FIG. 6 is a timing chart illustrating an operation of a main throttle valve when the accelerator switches from ON to OFF. (e) of FIG. 6 is a timing chart illustrating an operation of a reforming throttle valve when the accelerator switches from ON to OFF.

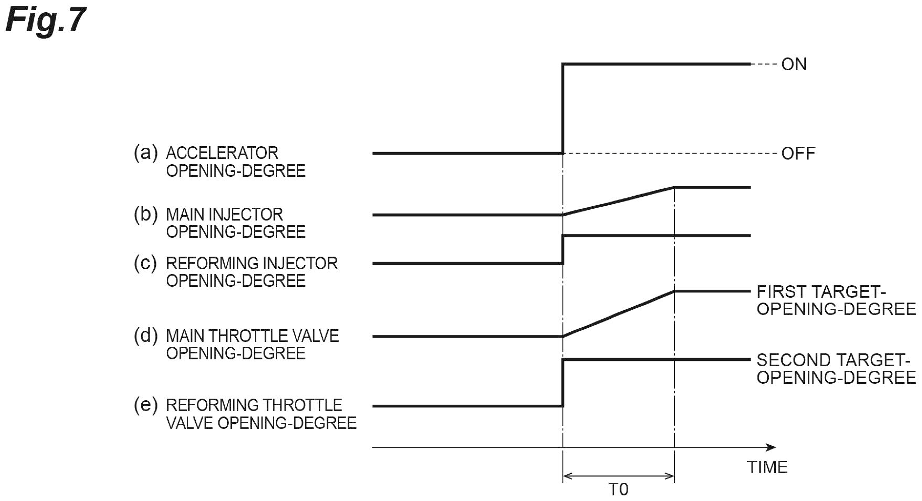

[FIG. 7] (a) of FIG. 7 is a timing chart illustrating switching of an accelerator from OFF to ON. (b) of FIG. 7 is a timing chart illustrating a modification example of an operation of a main injector when the accelerator switches from OFF to ON. (c) of FIG. 7 is a timing chart illustrating a modification example of an operation of a reforming injector when the accelerator switches from OFF to ON. (d) of FIG. 7 is a timing chart illustrating a modification example of an operation of a main throttle valve when the accelerator switches from OFF to ON. (e) of FIG. 7 is a timing chart illustrating a modification example of an operation of a reforming throttle valve when the accelerator switches from OFF to ON.
[FIG. 8] FIG. 8 is a schematic configuration diagram illustrating an engine system according to another embodiment of the present disclosure.

### Description of Embodiments

Hereinafter, embodiments of the present disclosure will be described in detail with reference to the drawings. In the drawings, the same or equivalent elements are denoted by the same reference numerals, and overlapping descriptions are omitted.

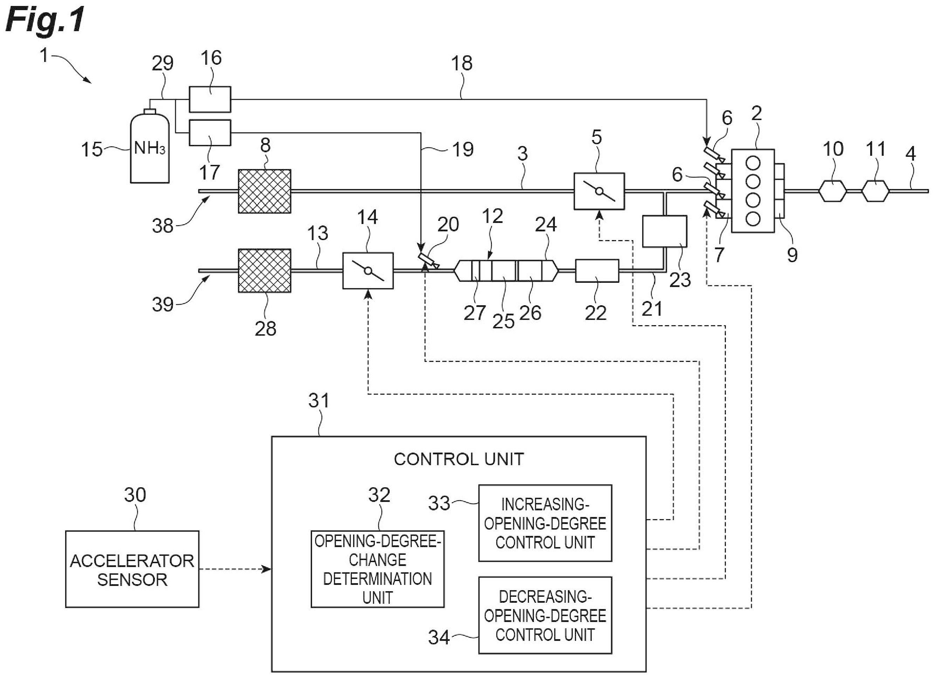

FIG. 1 is a schematic configuration diagram illustrating an engine system according to an embodiment of the present disclosure. In FIG. 1, an engine system 1 of the present embodiment is mounted on a vehicle (not shown). The engine system 1 includes an ammonia engine 2, an intake flow path 3, an exhaust flow path 4, a main throttle valve 5, and a main injector 6.

The ammonia engine 2 is an engine that uses ammonia gas (NH₃ gas) as fuel. In the ammonia engine 2, hydrogen (H₂) as a combustion aid is mixed with ammonia gas in order to make flame-retardant ammonia gas easier to combust. That is, in each cylinder of the ammonia engine 2, ammonia gas combusts together with hydrogen, and combustion gas is generated. The ammonia engine 2 is, for example, a four-cylinder engine.

The intake flow path 3 is connected to each cylinder of the ammonia engine 2 via an intake manifold 7. The intake flow path 3 is a flow path through which air supplied to the ammonia engine 2 flows. An air cleaner 8 that removes foreign matters such as dust and dirt contained in the air is disposed in the intake flow path 3.

The exhaust flow path 4 is connected to each cylinder of the ammonia engine 2 via an exhaust manifold 9. The exhaust flow path 4 is a flow path through which exhaust gas generated in the ammonia engine 2 flows. A three-way catalyst 10 that purifies NH₃ and NOx contained in the exhaust gas and an SCR catalyst 11 that adsorbs NH₃ that has passed through the three-way catalyst 10 are disposed in the exhaust flow path 4.

The main throttle valve 5 is disposed in the intake flow path 3. The main throttle valve 5 is an electromagnetic first flow-rate-control-valve that controls a flow rate of air supplied to each cylinder of the ammonia engine 2.

The main injector 6 is an electromagnetic first fuel-injection-valve that intermittently injects ammonia gas toward each cylinder of the ammonia engine 2. The main injector 6 injects ammonia gas into, for example, the intake manifold 7. The number of main injectors 6 is the same as the number of cylinders of the ammonia engine 2 (here, four). By changing the opening-degree of the main injector 6, it is possible to adjust the injection amount of ammonia gas.

Further, the engine system 1 includes a reformer 12, an upstream-side reforming flow path 13, a reforming throttle valve 14, an ammonia cylinder 15, a vaporizer 16, a vaporizer 17, an ammonia flow path 18, an ammonia flow path 19, a reforming injector 20, a downstream-side reforming flow path 21, a cooler 22, and a stop valve 23.

The reformer 12 generates a reformed gas containing hydrogen by reforming ammonia gas using heat generated by combusting ammonia gas. The reformer 12 has a cylindrical housing 24. The reformer 12 has a combustion catalyst 25, a reforming catalyst 26, and an electric heater 27 accommodated in the housing 24. The housing 24 is formed of stainless steel or the like having corrosion resistance to ammonia gas.

The combustion catalyst 25 and the reforming catalyst 26 have, for example, a honeycomb structure. The combustion catalyst 25 is a catalyst that combusts ammonia gas. The reforming catalyst 26 is disposed on a downstream side of the combustion catalyst 25 in the housing 24. The reforming catalyst 26 is a catalyst that decomposes ammonia gas into hydrogen. The combustion catalyst 25 and the reforming catalyst 26 are, for example, ATR (Autothermal Reformer) type catalysts.

The electric heater 27 is disposed on an upstream side of the combustion catalyst 25 in the housing 24. The electric heater 27 heats (warms up) the combustion catalyst 25 through ammonia gas and air by heating the ammonia gas and air introduced into the housing 24.

The upstream-side reforming flow path 13 is connected to an inlet portion of the housing 24 of the reformer 12. The upstream-side reforming flow path 13 is a flow path through which air supplied to the reformer 12 flows. An air cleaner 28 that removes foreign matters such as dust and dirt contained in the air is disposed in the upstream-side reforming flow path 13. The upstream-side reforming flow path 13 branches from, for example, the intake flow path 3.

The reforming throttle valve 14 is disposed in the upstream-side reforming flow path 13. The reforming throttle valve 14 is an electromagnetic second flow-rate-control-valve that controls a flow rate of air supplied to the reformer 12.

The ammonia cylinder 15 is a container that stores ammonia in a liquid state. That is, the ammonia cylinder 15 stores liquid ammonia.

The vaporizer 16 and the vaporizer 17 are connected to the ammonia cylinder 15 via an ammonia flow path 29. The ammonia flow path 29 is a flow path through which liquid ammonia stored in the ammonia cylinder 15 flows. The vaporizer 16 and the vaporizer 17 vaporize liquid ammonia to generate ammonia gas.

The ammonia flow path 18 connects the vaporizer 16 and each main injector 6. The ammonia flow path 18 is a flow path through which ammonia gas generated by the vaporizer 16 flows toward each main injector 6. The ammonia flow path 19 connects the vaporizer 17 and the reforming injector 20. The ammonia flow path 19 is a flow path through which ammonia gas generated by the vaporizer 17 flows toward the reforming injector 20.

The reforming injector 20 is an electromagnetic second fuel-injection-valve that intermittently injects ammonia gas toward the reformer 12. The reforming injector 20 injects ammonia gas into a portion between the reforming throttle valve 14 and the reformer 12 in the upstream-side reforming flow path 13. By changing the opening-degree of the reforming injector 20, it is possible to adjust the injection amount of ammonia gas.

The downstream-side reforming flow path 21 connects the reformer 12 and the intake flow path 3. One end of the downstream-side reforming flow path 21 is connected to an outlet portion of the housing 24 of the reformer 12. The other end of the downstream-side reforming flow path 21 is connected to the intake flow path 3 between the main throttle valve 5 and the ammonia engine 2. The downstream-side reforming flow path 21 is a flow path through which the reformed gas generated by the reformer 12 flows toward the ammonia engine 2.

The cooler 22 is disposed in the downstream-side reforming flow path 21. The cooler 22 cools the reformed gas flowing through the downstream-side reforming flow path 21.

The stop valve 23 is disposed on a downstream side of the cooler 22 in the downstream-side reforming flow path 21. The stop valve 23 is an opening/closing valve that opens and closes the downstream-side reforming flow path 21.

Here, the intake flow path 3, the main throttle valve 5, and the main injector 6 form a main line 38. The upstream-side reforming flow path 13, the reformer 12, the downstream-side reforming flow path 21, the reforming throttle valve 14, the reforming injector 20, the cooler 22, and the stop valve 23 form a reforming line 39.

Further, the engine system 1 includes an accelerator sensor 30 and a control unit 31.

The accelerator sensor 30 is a sensor that detects an opening-degree (depression amount) of an accelerator of the vehicle and outputs a detection value of the opening-degree of the accelerator as an electric signal. The electric signal output from the accelerator sensor 30 corresponds to a command value for the ammonia engine 2. Therefore, the accelerator sensor 30 forms a command value output unit that outputs a command value for the ammonia engine 2 after the ammonia engine 2 is started. A change in the opening-degree of the accelerator during operation of the ammonia engine 2 corresponds to a transient state in which operating conditions of the ammonia engine 2 change.

The control unit 31 includes a CPU, a RAM, a ROM, an input/output interface, and the like. The control unit 31 forms a control unit that controls the main throttle valve 5, the main injector 6, the reforming throttle valve 14, and the reforming injector 20 based on the detection value (command value) of the accelerator sensor 30.

When the detection value of the accelerator sensor 30 changes during operation of the ammonia engine 2, the control unit 31 sets a target-opening-degree of the main throttle valve 5 corresponding to the detection value of the accelerator sensor 30 as a first target-opening-degree. When the detection value of the accelerator sensor 30 changes during operation of the ammonia engine 2, the control unit 31 sets a target-opening-degree of the reforming throttle valve 14 corresponding to the detection value of the accelerator sensor 30 as a second target-opening-degree. The control unit 31 controls the main throttle valve 5 and the reforming throttle valve 14 so that a timing at which the opening-degree of the main throttle valve 5 reaches the first target-opening-degree is later than a timing at which the opening-degree of the reforming throttle valve 14 reaches the second target-opening-degree.

At this time, the control unit 31 controls the main throttle valve 5 and the reforming throttle valve 14 so that a timing at which the opening-degree of the main throttle valve 5 starts to change is later than a timing at which the opening-degree of the reforming throttle valve 14 starts to change.

The control unit 31 has an opening-degree-change determination unit 32, an increasing-opening-degree control unit 33, and a decreasing-opening-degree control unit 34.

The opening-degree-change determination unit 32 determines whether or not the opening-degree of the accelerator has changed based on the detection value of the accelerator sensor 30.

When it is determined by the opening-degree-change determination unit 32 that the opening-degree of the accelerator has changed in an increasing direction, the increasing-opening-degree control unit 33 sets the first target-opening-degree and the second target-opening-degree such that the first target-opening-degree and the second target-opening-degree increase in accordance with the detection value of the accelerator sensor 30. The increasing-opening-degree control unit 33 controls the main throttle valve 5 and the reforming throttle valve 14 so that a timing at which the opening-degree of the main throttle valve 5 reaches the first target-opening-degree is later than a timing at which the opening-degree of the reforming throttle valve 14 reaches the second target-opening-degree.

When it is determined by the opening-degree-change determination unit 32 that the opening-degree of the accelerator has changed in a decreasing direction, the decreasing-opening-degree control unit 34 sets the first target-opening-degree and the second target-opening-degree such that the first target-opening-degree and the second target-opening-degree decrease in accordance with the detection value of the accelerator sensor 30. The decreasing-opening-degree control unit 34 controls the main throttle valve 5 and the reforming throttle valve 14 so that a timing at which the opening-degree of the main throttle valve 5 reaches the first target-opening-degree is later than a timing at which the opening-degree of the reforming throttle valve 14 reaches the second target-opening-degree.

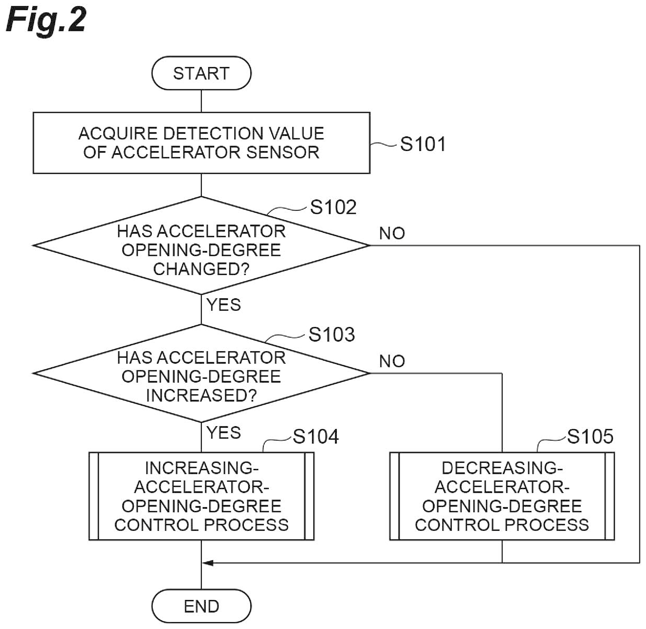

FIG. 2 is a flowchart illustrating a procedure of control processing executed by the control unit 31. This processing is executed when the ammonia engine 2 is started. When the ammonia engine 2 is started, the stop valve 23 opens.

In FIG. 2, the control unit 31 first acquires the detection value of the accelerator sensor 30 (step S101). Then, the control unit 31 determines whether or not the opening-degree of the accelerator has changed based on the detection value of the accelerator sensor 30 (step S102). The control unit 31 may determine that the opening-degree of the accelerator has changed when the opening-degree of the accelerator has changed by a predetermined specified amount or more.

When determining that the opening-degree of the accelerator has changed, the control unit 31 determines whether or not the opening-degree of the accelerator has changed in the increasing direction (step S103). When determining that the opening-degree of the accelerator has changed in the increasing direction, the control unit 31 executes control processing at the time of an accelerator opening-degree increase (step S104). When determining that the opening-degree of the accelerator has changed in the decreasing direction, the control unit 31 executes control processing at the time of an accelerator opening-degree decrease (step S105).

After executing step S104 or step S105, the control unit 31 executes step S101 described above again. Also when determining in step S102 that the opening-degree of the accelerator has not changed, the control unit 31 executes step S101 described above again.

Here, the opening-degree-change determination unit 32 executes steps S101 to S103 described above. The increasing-opening-degree control unit 33 executes step S104 described above. The decreasing-opening-degree control unit 34 executes step S105 described above.

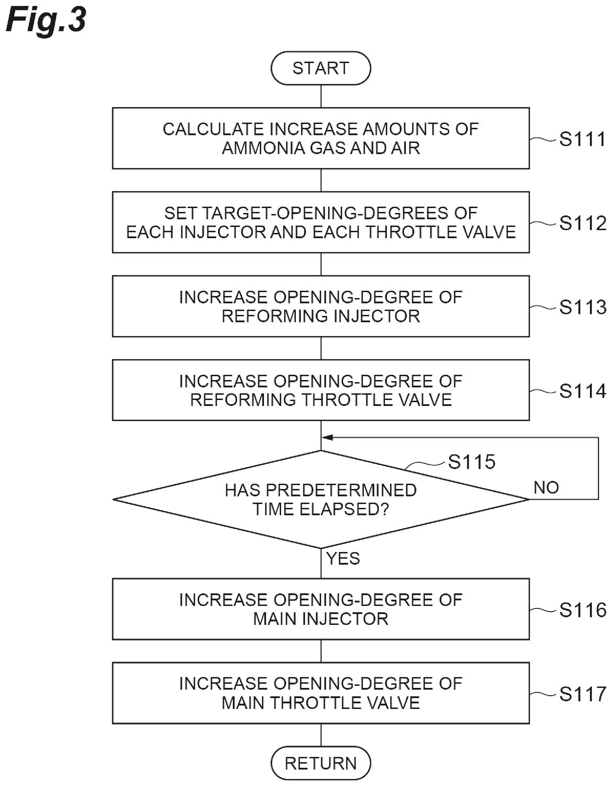

FIG. 3 is a flowchart illustrating details of a procedure of the control processing at the time of the accelerator opening-degree increase in step S104.

In FIG. 3, the control unit 31 first calculates increase amounts of ammonia gas and air based on the detection value of the accelerator sensor 30 (step S111). The increase amounts of ammonia gas and air are calculated from, for example, map data representing a relationship between the opening-degree of the accelerator and flow rates of ammonia gas and air.

Subsequently, the control unit 31 sets target-opening-degrees of each injector (the main injector 6 and the reforming injector 20) and each throttle valve (the main throttle valve 5 and the reforming throttle valve 14) based on the increase amounts of ammonia gas and air (step S112). The target-opening-degrees of the main injector 6, the main throttle valve 5, the reforming injector 20, and the reforming throttle valve 14 are obtained from, for example, map data representing a relationship between the increase amounts of ammonia gas and air and each target-opening-degree.

Subsequently, the control unit 31 controls the reforming injector 20 so that the opening-degree of the reforming injector 20 increases to the target-opening-degree (step S113). The control unit 31 controls the reforming throttle valve 14 so that the opening-degree of the reforming throttle valve 14 increases to the target-opening-degree (second target-opening-degree) (step S114). Note that the order of executing steps S113 and S114 is not particularly limited thereto, and step S114 may be executed before step S113, or steps S113 and S114 may be executed simultaneously.

Subsequently, the control unit 31 determines whether or not a predetermined time T has elapsed since controlling the reforming throttle valve 14 in step S114 (step S115). The predetermined time T is a time determined in advance in consideration of a supply delay (described later) of the reformed gas with respect to air supplied to the ammonia engine 2 (see (a) of FIG. 5 to (e) of FIG. 5).

When determining that the predetermined time T has elapsed, the control unit 31 controls the main injector 6 so that the opening-degree of the main injector 6 increases to the target-opening-degree (step S116). The control unit 31 controls the main throttle valve 5 so that the opening-degree of the main throttle valve 5 increases to the target-opening-degree (first target-opening-degree) (step S117). Note that the order of executing steps S116 and S117 is not particularly limited thereto, and step S117 may be executed before step S116, or steps S116 and S117 may be executed simultaneously.

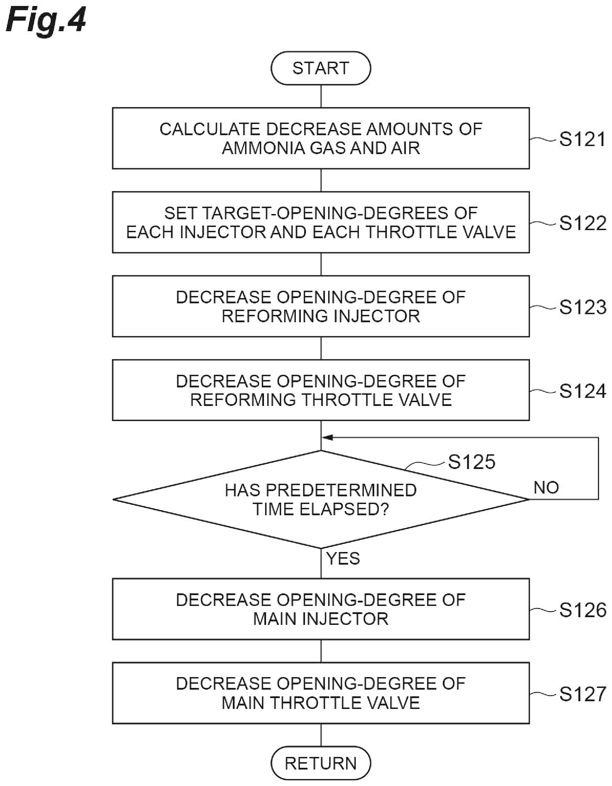

FIG. 4 is a flowchart illustrating details of a procedure of the control processing at the time of the accelerator opening-degree decrease in step S105.

In FIG. 4, the control unit 31 first calculates decrease amounts of ammonia gas and air based on the detection value of the accelerator sensor 30 (step S121). The decrease amounts of ammonia gas and air are calculated from, for example, map data representing the relationship between the opening-degree of the accelerator and the flow rates of ammonia gas and air, similarly to step S111 described above.

Subsequently, the control unit 31 sets target-opening-degrees of each injector (the main injector 6 and the reforming injector 20) and each throttle valve (the main throttle valve 5 and the reforming throttle valve 14) based on the decrease amounts of ammonia gas and air (step S122). The target-opening-degrees of the main injector 6, the main throttle valve 5, the reforming injector 20, and the reforming throttle valve 14 are obtained from, for example, map data representing a relationship between the decrease amounts of ammonia gas and air and each target-opening-degree.

Subsequently, the control unit 31 controls the reforming injector 20 so that the opening-degree of the reforming injector 20 decreases to the target-opening-degree (step S123). The control unit 31 controls the reforming throttle valve 14 so that the opening-degree of the reforming throttle valve 14 decreases to the target-opening-degree (second target-opening-degree) (step S124). Note that the order of executing steps S123 and S124 is not particularly limited thereto, and step S124 may be executed before step S123, or steps S123 and S124 may be executed simultaneously.

Subsequently, the control unit 31 determines whether or not a predetermined time T has elapsed since controlling the reforming throttle valve 14 in step S124 (step S125). The predetermined time T is a time determined in advance in consideration of a supply delay (described later) of the reformed gas with respect to air supplied to the ammonia engine 2 (see (a) of FIG. 6 to (e) of FIG. 6). The predetermined time T is the same as the predetermined time T used in step S115 described above.

When determining that the predetermined time T has elapsed, the control unit 31 controls the main injector 6 so that the opening-degree of the main injector 6 decreases to the target-opening-degree (step S126). The control unit 31 controls the main throttle valve 5 so that the opening-degree of the main throttle valve 5 decreases to the target-opening-degree (first target-opening-degree) (step S127). Note that the order of executing steps S126 and S127 is not particularly limited thereto, and step S127 may be executed before step S126, or steps S126 and S127 may be executed simultaneously.

In the engine system 1 as described above, an ignition switch (not shown) of the vehicle is operated to be ON, and the ammonia engine 2 is started. Then, the reforming injector 20, the reforming throttle valve 14, the main injector 6, and the main throttle valve 5 open. Then, ammonia gas and air are supplied to the reformer 12 and the ammonia engine 2.

When ammonia gas and air are supplied to the reformer 12, the ammonia gas and air are heated by the electric heater 27. Then, since the combustion catalyst 25 is heated by the heat of the ammonia gas and air, the temperature of the combustion catalyst 25 rises. When the temperature of the combustion catalyst 25 reaches an activation temperature (combustible temperature), ammonia gas is combusted by the combustion catalyst 25. Specifically, as shown in the following formula, ammonia and oxygen in the air chemically react (exothermic reaction).

NH₃ + 3/4O₂ -> 1/2N₂ + 3/2H₂O + Q1 (exothermic) ... (A)

When ammonia gas combusts, the temperature of the reforming catalyst 26 rises due to combustion heat of the ammonia gas. When the temperature of the reforming catalyst 26 reaches a reaction temperature (reformable temperature), ammonia gas is reformed by the reforming catalyst 26. Specifically, as shown in the following reaction formula, a decomposition reaction of ammonia occurs (endothermic reaction), and a reformed gas containing hydrogen is generated.

NH₃ -> 3/2H₂ + 1/2N₂ - Q2 (endothermic) ... (B)

The reformed gas flows through the downstream-side reforming flow path 21. At this time, the reformed gas flows through the intake flow path 3 and is supplied to the ammonia engine 2 in a state of being cooled by the cooler 22. Then, in the ammonia engine 2, a transition is made to a steady state in which ammonia gas combusts together with hydrogen in the reformed gas.

FIG. 5 is a timing chart illustrating operations of the main injector 6, the reforming injector 20, the main throttle valve 5, and the reforming throttle valve 14 when the accelerator switches from OFF to ON as an example at the time of an increase in the accelerator opening degree. Accelerator OFF means a state where the accelerator is not operated, for example, during idling. Accelerator ON means a state where the accelerator is operated, for example, during steady operation.

In the steady state, as shown in (a) of FIG. 5, when the accelerator switches from OFF to ON, target-opening-degrees of the main throttle valve 5, the main injector 6, the reforming throttle valve 14, and the reforming injector 20 are set such that flow rates of ammonia gas and air supplied to the ammonia engine 2 and the reformer 12 increase. Note that when the accelerator is OFF, the main throttle valve 5, the main injector 6, the reforming throttle valve 14, and the reforming injector 20 are in a slightly open state.

Then, as shown in (c) of FIG. 5, the opening-degree of the reforming injector 20 increases rapidly to the target-opening-degree, and as shown in (e) of FIG. 5, the opening-degree of the reforming throttle valve 14 increases rapidly to the target-opening-degree (second target-opening-degree).

Thereafter, when the predetermined time T elapses, as shown in (b) of FIG. 5, the opening-degree of the main injector 6 increases rapidly to the target-opening-degree, and as shown in (d) of FIG. 5, the opening-degree of the main throttle valve 5 increases rapidly to the target-opening-degree (first target-opening-degree). That is, the opening-degrees of the main injector 6 and the main throttle valve 5 increase at a timing later than the opening-degrees of the reforming injector 20 and the reforming throttle valve 14.

FIG. 6 is a timing chart illustrating operations of the main injector 6, the reforming injector 20, the main throttle valve 5, and the reforming throttle valve 14 when the accelerator switches from ON to OFF as an example at the time of the accelerator opening-degree decrease.

In the steady state, as shown in (a) of FIG. 6, when the accelerator switches from ON to OFF, target-opening-degrees of the main throttle valve 5, the main injector 6, the reforming throttle valve 14, and the reforming injector 20 are set such that flow rates of ammonia gas and air supplied to the ammonia engine 2 and the reformer 12 decrease.

Then, as shown in (c) of FIG. 6, the opening-degree of the reforming injector 20 decreases rapidly to the target-opening-degree, and as shown in (e) of FIG. 6, the opening-degree of the reforming throttle valve 14 decreases rapidly to the target-opening-degree (second target-opening-degree).

Thereafter, when the predetermined time T elapses, as shown in (b) of FIG. 6, the opening-degree of the main injector 6 decreases rapidly to the target-opening-degree, and as shown in (d) of FIG. 6, the opening-degree of the main throttle valve 5 decreases rapidly to the target-opening-degree (first target-opening-degree). That is, the opening-degrees of the main injector 6 and the main throttle valve 5 decrease at a timing later than the opening-degrees of the reforming injector 20 and the reforming throttle valve 14.

By the way, during transient operation of the ammonia engine 2 such as when the accelerator switches from OFF to ON or when the accelerator switches from ON to OFF, if opening-degree adjustment of the main throttle valve 5 and the reforming throttle valve 14 is not performed appropriately in the main line 38 and the reforming line 39, gas may be sucked into the ammonia engine 2 in an unintended state. In this case, in the ammonia engine 2, a suitable A/F (air-fuel ratio) is not ensured, and it becomes difficult to obtain a good combustion state.

Specifically, pressure loss differs between the main line 38 and the reforming line 39. In the main line 38, response is made promptly according to a change in the opening-degree of the main throttle valve 5. However, in the reforming line 39, the combustion catalyst 25, the reforming catalyst 26, and the cooler 22, which have a large pressure loss are disposed. Therefore, a delay occurs in the flow of the reformed gas. Further, in the reforming line 39, ammonia gas is supplied on an upstream side of the reformer 12, and the ammonia gas is reformed by the reformer 12 to generate the reformed gas. The reformed gas flows through the downstream-side reforming flow path 21 and merges with the intake flow path 3.

Therefore, when the accelerator switches from OFF to ON, if the opening-degrees of the main throttle valve 5 and the reforming throttle valve 14 increase at the same timing, the amount of air increases promptly in the main line 38, but the increase in the amount of the reformed gas is delayed in the reforming line 39 compared to the main line 38. For this reason, in the ammonia engine 2, a state occurs in which the flow rate of air is large and the flow rate of hydrogen contained in the reformed gas is small. As a result, misfire may occur. In this case, unburned ammonia flows out from the ammonia engine 2.

On the other hand, when the accelerator switches from ON to OFF, if the opening-degrees of the main throttle valve 5 and the reforming throttle valve 14 decrease at the same timing, the amount of air decreases promptly in the main line 38, but the decrease in the amount of the reformed gas is delayed in the reforming line 39 compared to the main line 38. For this reason, supply of the reformed gas to the ammonia engine 2 continues for a while. Therefore, in the ammonia engine 2, a state occurs in which the flow rate of air is small and the flow rate of hydrogen contained in the reformed gas is large. As a result, fuel combusts suddenly and combustion becomes vigorous, and control of the ammonia engine 2 may become unstable.

Thus, for example, when the accelerator switches from OFF to ON, it is conceivable to make the A/F uniform and prevent a lean condition by increasing the opening-degree of the main injector 6 to increase the injection amount of ammonia gas from the main injector 6. However, even in this case, since it does not contribute to an increase in the amount of hydrogen which is auxiliary fuel for promoting combustion of ammonia gas, combustion of ammonia gas becomes slow.

In response to such an issue, in the present embodiment, when the detection value of the accelerator sensor 30 (command value for the ammonia engine 2) changes during operation of the ammonia engine 2, the target-opening-degree of the main throttle valve 5 corresponding to the detection value of the accelerator sensor 30 is set as the first target-opening-degree, and the target-opening-degree of the reforming throttle valve 14 corresponding to the detection value of the accelerator sensor 30 is set as the second target-opening-degree. Then, the main throttle valve 5 and the reforming throttle valve 14 are controlled so that the timing at which the opening-degree of the main throttle valve 5 reaches the first target-opening-degree is later than the timing at which the opening-degree of the reforming throttle valve 14 reaches the second target-opening-degree. For this reason, the timing at which the opening-degree of the main throttle valve 5 reaches the first target-opening-degree becomes later than the timing at which the opening-degree of the reforming throttle valve 14 reaches the second target-opening-degree. Thereby, since the reformed gas and air are appropriately supplied to the ammonia engine 2 even during a transition in which the operating conditions of the ammonia engine 2 change, a suitable A/F is ensured. As a result, a good combustion state is obtained. Further, since a sub-reformer is not provided for each cylinder of the ammonia engine 2, a valve or the like for injecting ammonia gas toward the sub-reformer is also not provided. Therefore, simplification of the configuration of the engine system 1 is achieved.

In the present embodiment, when the detection value of the accelerator sensor 30 changes in the increasing direction during operation of the ammonia engine 2, the first target-opening-degree and the second target-opening-degree are set so as to increase following the detection value of the accelerator sensor 30. The timing at which the opening-degree of the main throttle valve 5 increases to the first target-opening-degree becomes later than the timing at which the opening-degree of the reforming throttle valve 14 increases to the second target-opening-degree. Therefore, since a suitable A/F is ensured, misfire caused by a state where the flow rate of hydrogen contained in the reformed gas is small relative to the flow rate of air is suppressed.

In the present embodiment, when the detection value of the accelerator sensor 30 changes in the decreasing direction during operation of the ammonia engine 2, the first target-opening-degree and the second target-opening-degree are set so as to decrease following the detection value of the accelerator sensor 30. The timing at which the opening-degree of the main throttle valve 5 decreases to the first target-opening-degree becomes later than the timing at which the opening-degree of the reforming throttle valve 14 decreases to the second target-opening-degree. Therefore, since a suitable A/F is ensured, excessive combustion and an unstable state of engine control caused by a state where the flow rate of hydrogen contained in the reformed gas is large relative to the flow rate of air are suppressed.

In the present embodiment, the timing at which the change in the opening-degree of the main throttle valve 5 starts is later than the timing at which the change in the opening-degree of the reforming throttle valve 14 starts. For this reason, the timing at which the opening-degree of the main throttle valve 5 reaches the first target-opening-degree becomes reliably later than the timing at which the opening-degree of the reforming throttle valve 14 reaches the second target-opening-degree. Further, since the opening-degree of the main throttle valve 5 changes rapidly, the flow rate of air supplied to the ammonia engine 2 becomes easy to control.

Note that in the present embodiment, the timing at which the opening-degree of the main throttle valve 5 starts to change is later than the timing at which the opening-degree of the reforming throttle valve 14 starts to change, but the configuration is not particularly limited thereto, and modification is possible as shown in FIG. 7.

In the modification example shown in FIG. 7, the control unit 31 controls the main throttle valve 5 and the reforming throttle valve so that an opening/closing speed of the main throttle valve 5 is slower than an opening/closing speed of the reforming throttle valve 14. For this reason, the control unit 31 controls the main throttle valve 5 and the reforming throttle valve 14 so that the timing at which the opening-degree of the main throttle valve 5 reaches the first target-opening-degree is later than the timing at which the opening-degree of the reforming throttle valve 14 reaches the second target-opening-degree.

When the accelerator switches from OFF to ON (see (a) of FIG. 7), the opening-degrees of the reforming injector 20 and the reforming throttle valve 14 increase rapidly to the target-opening-degrees (see (c) of FIG. 7 and (e) of FIG. 7), and the opening-degrees of the main injector 6 and the main throttle valve 5 start to increase (see (b) of FIG. 7 and (d) of FIG. 7). Then, after a predetermined time T0 elapses, the opening-degrees of the main injector 6 and the main throttle valve 5 reach the target-opening-degrees.

When the accelerator switches from ON to OFF, the opening-degrees of the reforming injector 20 and the reforming throttle valve 14 decrease rapidly to the target-opening-degrees, and the opening-degrees of the main injector 6 and the main throttle valve 5 start to decrease. Then, after the predetermined time T0 elapses, the opening-degrees of the main injector 6 and the main throttle valve 5 reach the target-opening-degrees.

In this case, the increasing-opening-degree control unit 33 of the control unit 31 does not execute step S115 of FIG. 3, and makes a valve opening speed of the main injector 6 slower than a valve opening speed of the reforming injector 20 in step S116 of FIG. 3, and makes a valve opening speed of the main throttle valve 5 slower than a valve opening speed of the reforming throttle valve 14 in step S117 of FIG. 3.

The decreasing-opening-degree control unit 34 of the control unit 31 does not execute step S125 of FIG. 4, and makes a valve closing speed of the main injector 6 slower than a valve closing speed of the reforming injector 20 in step S126 of FIG. 4, and makes a valve closing speed of the main throttle valve 5 slower than a valve closing speed of the reforming throttle valve 14 in step S127 of FIG. 4.

As described above, in this modification example, the opening/closing speed of the main throttle valve 5 becomes slower than the opening/closing speed of the reforming throttle valve 14. For this reason, the timing at which the opening-degree of the main throttle valve 5 reaches the first target-opening-degree becomes reliably later than the timing at which the opening-degree of the reforming throttle valve 14 reaches the second target-opening-degree. Since the opening-degree of the main throttle valve 5 changes gradually, the main throttle valve 5 comes to perform opening/closing operation smoothly.

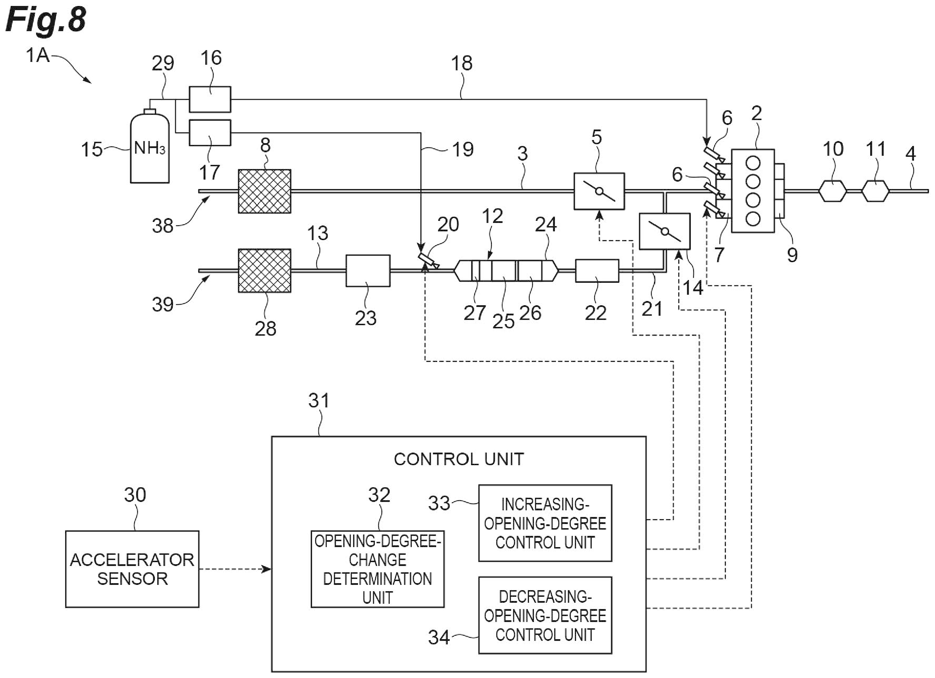

FIG. 8 is a schematic configuration diagram illustrating an engine system according to another embodiment of the present disclosure. In FIG. 8, an engine system 1A of the present embodiment differs from the engine system 1 in the above embodiment in that arrangement locations of the reforming throttle valve 14 and the stop valve 23 are swapped. That is, the reforming throttle valve 14 is disposed in the downstream-side reforming flow path 21. The stop valve 23 is disposed in the upstream-side reforming flow path 13.

The reforming throttle valve 14 controls the flow rate of the reformed gas supplied to the ammonia engine 2 together with the flow rate of air supplied to the reformer 12. Specifically, the reforming throttle valve 14 controls the flow rate of air supplied to the reformer 12 before the reformed gas is generated by the reformer 12. The reforming throttle valve 14 controls the flow rate of air supplied to the reformer 12 and the flow rate of the reformed gas after the reformed gas is generated by the reformer 12.

In the present embodiment, air flowing through the upstream-side reforming flow path 13 is supplied to the reformer 12, and the reformed gas is generated. The reformed gas flows through the downstream-side reforming flow path 21 and is supplied to the ammonia engine 2. The reforming throttle valve 14 is disposed in the downstream-side reforming flow path 21. Therefore, compared to a case where the reforming throttle valve 14 is disposed in the upstream-side reforming flow path 13, by increasing the opening-degree of the reforming throttle valve 14, the supply amount of the reformed gas to the ammonia engine 2 can be increased promptly. By decreasing the opening-degree of the reforming throttle valve 14, the supply amount of the reformed gas to the ammonia engine 2 can be decreased promptly.

The present disclosure is not limited to the above embodiments. For example, in the above embodiment, the timing at which the change in the opening-degree of the main injector 6 starts is equal to the timing at which the change in the opening-degree of the main throttle valve 5 starts, but the configuration is not particularly limited thereto. If the timing at which the change in the opening-degree of the main injector 6 starts is later than the timing at which the change in the opening-degree of the reforming injector 20 starts, the timing at which the change in the opening-degree of the main injector 6 starts may be different from the timing at which the change in the opening-degree of the main throttle valve 5 starts.

In the above embodiment, if the opening/closing speed of the main injector 6 becomes slower than the opening/closing speed of the reforming injector 20, the opening/closing speed of the main injector 6 may be equal to the opening/closing speed of the main throttle valve 5, or the opening/closing speed of the main injector 6 may be different from the opening/closing speed of the main throttle valve 5.

In the above embodiment, the reformer 12 separately has the combustion catalyst 25 that combusts ammonia gas and the reforming catalyst 26 that decomposes ammonia gas into hydrogen, but the configuration is not particularly limited thereto. The reformer 12 may have a catalyst having both a function of combusting ammonia gas and a function of decomposing ammonia gas into hydrogen.

In the above embodiment, the air cleaners 8 and 28 are disposed in the main line 38 and the reforming line 39, respectively, but the configuration is not particularly limited thereto. For example, the upstream-side reforming flow path 13 may be branch-connected to a portion between the air cleaner 8 and the main throttle valve 5 in the intake flow path 3, and the air cleaner 28 may be eliminated. In this case, simplification of the system configuration can be achieved.

In the above embodiment, ammonia gas generated by the vaporizer 16 flows through the ammonia flow path 18 and is supplied to the main injector 6, and ammonia gas generated by the vaporizer 17 flows through the ammonia flow path 19 and is supplied to the reforming injector 20, but the configuration is not particularly limited thereto. For example, the number of vaporizers may be one, and the ammonia flow paths 18 and 19 may be connected to the vaporizer. Also in this case, simplification of the system configuration can be achieved.

In the above embodiment, the main injector 6 that injects ammonia gas toward the ammonia engine 2 is provided for each cylinder of the ammonia engine 2, but the number of main injectors 6 is not particularly limited to plural, and may be one. In this case, the main injector 6 is arranged so as to inject ammonia gas into the intake flow path 3 in the vicinity of the ammonia engine 2.

The engine system 1 of the above embodiment is mounted on a vehicle, but the configuration is not particularly limited thereto, and for example, it may be mounted on a ground power generation device or the like. In this case, for example, an operation device input-operated by an operator forms the command value output unit that outputs the command value for the ammonia engine 2 after the ammonia engine 2 is started.

In the above embodiment, ammonia gas is used as fuel, but the present disclosure is also applicable to an engine system using hydrocarbon or the like as fuel.

### Reference Signs List

1, 1A...engine system, 2...ammonia engine (engine), 3...intake flow path, 5...main throttle valve (first flow-rate-control-valve), 6...main injector (first fuel-injection-valve), 12...reformer, 13...upstream-side reforming flow path, 14...reforming throttle valve (second flow-rate-control-valve), 20...reforming injector (second fuel-injection-valve), 21...downstream-side reforming flow path, 25...combustion catalyst (catalyst), 26...reforming catalyst (catalyst), 30...accelerator sensor (command value output unit), 31...control unit (control unit).

## Claims

1. An engine system comprising:
an engine in which fuel combusts together with hydrogen;
an intake flow path through which air supplied to the engine flows;
a first flow-rate-control-valve provided in the intake flow path and configured to control a flow rate of air supplied to the engine;
a first fuel-injection-valve configured to inject fuel toward the engine;
a reformer including a catalyst that decomposes the fuel into the hydrogen and configured to reform the fuel to generate a reformed gas containing the hydrogen;
an upstream-side reforming flow path through which air supplied to the reformer flows;
a downstream-side reforming flow path through which the reformed gas generated by the reformer flows toward the engine;
a second flow-rate-control-valve provided in the upstream-side reforming flow path or the downstream-side reforming flow path and configured to control a flow rate of air supplied to the reformer;
a second fuel-injection-valve configured to inject fuel toward the reformer;
a command value output unit configured to output a command value for the engine after the engine is started; and
a control unit configured to control the first flow-rate-control-valve, the first fuel-injection-valve, the second flow-rate-control-valve, and the second fuel-injection-valve based on the command value output from the command value output unit,
wherein, when the command value output from the command value output unit changes during operation of the engine, the control unit sets a target-opening-degree of the first flow-rate-control-valve corresponding to the command value as a first target-opening-degree, sets a target-opening-degree of the second flow-rate-control-valve corresponding to the command value as a second target-opening-degree, and controls the first flow-rate-control-valve and the second flow-rate-control-valve so that a timing at which an opening-degree of the first flow-rate-control-valve reaches the first target-opening-degree is later than a timing at which an opening-degree of the second flow-rate-control-valve reaches the second target-opening-degree.

2. The engine system according to claim 1,
wherein, when the command value output from the command value output unit changes in an increasing direction during operation of the engine, the control unit sets the first target-opening-degree and the second target-opening-degree such that the first target-opening-degree and the second target-opening-degree increase in accordance with the command value.

3. The engine system according to claim 1,
wherein, when the command value output from the command value output unit changes in a decreasing direction during operation of the engine, the control unit sets the first target-opening-degree and the second target-opening-degree such that the first target-opening-degree and the second target-opening-degree decrease in accordance with the command value.

4. The engine system according to claim 1,
wherein the control unit controls the first flow-rate-control-valve and the second flow-rate-control-valve so that a timing at which the opening-degree of the first flow-rate-control-valve starts to change is later than a timing at which the opening-degree of the second flow-rate-control-valve starts to change.

5. The engine system according to claim 1,
wherein the control unit controls the first flow-rate-control-valve and the second flow-rate-control-valve so that an opening/closing speed of the first flow-rate-control-valve is slower than an opening/closing speed of the second flow-rate-control-valve.

6. The engine system according to claim 1,
wherein the second flow-rate-control-valve is disposed in the downstream-side reforming flow path and configured to control the flow rate of the reformed gas supplied to the engine together with the flow rate of air supplied to the reformer.
